# EUROPÄISCHE PATENTSCHRIFT

(11) **EP 2 732 244 B1**
(45) Veröffentlichungstag und Bekanntmachung des Hinweises auf die Patenterteilung: **19.08.2015**
(21) Anmeldenummer: 12733142.9
(22) Anmeldetag: 09.07.2012
(51) Int. Cl.: G01D 5/24

(54) **POSITIONSERFASSUNGSVORRICHTUNG**
POSITION DETECTION DEVICE
DISPOSITIF DE DÉTECTION DE POSITION

(30) Priorität: 14.07.2011 DE 102011079174
(43) Veröffentlichungstag der Anmeldung: 21.05.2014
(73) Patentinhaber: ZF Friedrichshafen AG, 88038 Friedrichshafen (DE)
(72) Erfinder: HARTRAMPF, Ralf, 49419 Wangenfeld (DE); GIEFER, Andreas, 49448 Lemfoerde (DE); RAKE, Ludger, 49439 Steinfeld (DE)
(86) Internationale Anmeldenummer: PCT/EP2012/063354
(87) Internationale Veröffentlichungsnummer: WO 2013/007670

(56) Entgegenhaltungen:
- DE-A1- 4 442 711
- US-A1- 2004 183 553

## Beschreibung

Die Erfindung betrifft eine Positionserfassungsvorrichtung, mit einem ersten Elektrodenpaar, einem einen elektrischen Widerstand bildenden, elektrisch leitenden Körper, der mit den Elektroden des ersten Elektrodenpaars elektrisch verbunden ist und sich in einer ersten Richtung zwischen diesen erstreckt, und einer Messelektrode, die mit der Oberfläche eines zwischen den Elektroden des ersten Elektrodenpaars liegenden Messbereichs des Körpers elektrisch leitend in Berührung steht und relativ zu diesem bewegbar ist.

Zur Erfassung von Wegstrecken werden Hallsensoren, optische Sensoren und induktive Systeme verwendet. Die DE 10 2007 008 155 A1 offenbart z.B. eine Vorrichtung zur Erfassung von Relativbewegungen von Fahrwerkskomponenten eines Fahrwerks, aufweisend einen Signalgeber, der sich auf einer ersten Fahrwerkskomponente befindet und einen Signalempfänger, der sich auf einer zu der ersten Fahrwerkskomponente relativ bewegbaren zweiten Fahrwerkskomponente befindet, wobei der Signalempfänger so ausgebildet ist, dass die relative dreidimensionale Lage des Signalgebers zum Signalempfänger erfassbar ist. Dabei umfasst der Signalgeber einen Magneten und der Signalempfänger einen 3D-Hallsensor.

Nachteilig an einer solchen berührungsfreien Erfassungsmethode ist, dass zu ihrer Realisierung erhebliche Kosten anfallen.

Das Dokument DE 44 42 711 A1 offenbart ein kapazitives Messprinzip zur berührungslosen Bestimmung von Dicken, Schichten, Abständen und Füllständen. Die kapazitive Messvorrichtung weist eine solche Elektrodenanordnung auf, dass eine Materialdicke bzw. ein Füllstand in einem von den Elektroden eingefassten Hohlraum zuverlässig bestimmbar ist.

Das Dokument US 2004/183553 A1 offenbart eine Positionserfassungsvorrichtung mit den oberbegrifflichen Merkmalen des Patentanspruchs 1.

Ausgehend hiervon liegt der Erfindung die Aufgabe zugrunde, eine Positionserfassungsvorrichtung der eingangs genannten Art möglichst kostengünstig ausbilden zu können.

Diese Aufgabe wird mit einer Positionserfassungsvorrichtung nach Anspruch 1 gelöst. Bevorzugte Weiterbildungen der Positionserfassungsvorrichtung sind in den Unteransprüchen und in der nachfolgenden Beschreibung gegeben.

Die Positionserfassungsvorrichtung umfasst ein erstes und zweites Elektrodenpaar, einen elektrischen Widerstand bildenden, elektrisch leitenden Körper, der mit den Elektroden des ersten und zweiten Elektrodenpaars elektrisch verbunden ist und sich in einer ersten Richtung zwischen den Elektroden des ersten Elektrodenpaares und in einer zweiten Richtung zwischen den Elektroden des zweiten Elektrodenpaares erstreckt, und eine Messelektrode, die mit der Oberfläche eines zwischen den Elektroden des ersten und zweiten Elektrodenpaars liegenden Messbereichs des Körpers elektrisch leitend in Berührung steht und relativ zu diesem bewegbar ist. Die Positionserfassungsvorrichtung zeichnet sich aus durch wenigstens einen mit der Messelektrode elektrisch verbundenen Spannungsmesser, der mit einer ersten Elektrode des ersten Elektrodenpaars und/oder mit einer ersten Elektrode des zweiten Elektrodenpaars elektrisch verbindbar ist und die elektrische Spannung zwischen der jeweiligen ersten Elektrode und der Messelektrode messen kann.

Bei der Positionserfassungsvorrichtung ist ein mit der Messelektrode abgreifbares elektrisches Potential abhängig vom Ort der Messelektrode auf der Oberfläche des Messbereichs, wenn dieser einem elektrischen Feld ausgesetzt wird. Da durch Anlegen einer elektrischen Spannung an das erste Elektrodenpaar in dem Körper ein elektrisches Feld in der ersten Richtung und durch Anlegen einer elektrischen Spannung an das zweite Elektrodenpaar in dem Körper ein elektrisches Feld in der zweiten Richtung erzeugt werden kann, ist über das mittels der Messelektrode abgreifbare elektrische Potential eine zweidimensionale Erfassung der Position der Messelektrode auf der Oberfläche des Messbereichs möglich. Zwar arbeitet die Positionserfassungsvorrichtung nicht berührungsfrei, die zwischen der Messelektrode und der Oberfläche des Messbereichs auftretende Reibung und der daraus resultierende Verschleiß sind für viele Anwendungen aber vernachlässigbar. Ferner kann ein bereits vorhandenes Bauteil, welches nach seiner bestimmungsgemäßen Funktion in Berührung mit einem zweiten Bauteil steht, verwendet werden, beispielsweise als Körper oder als Messelektrode. Somit besteht häufig kein Bedarf an einer berührungsfreien Sensorik, sodass der dafür erforderliche Aufwand eingespart werden kann. Bevorzugt ist die Messelektrode als elektrischer Schleifkontakt ausgebildet, der an der Oberfläche des Messbereichs anliegt und entlang dieser gleiten kann.

Bei den beiden Richtungen handelt es sich insbesondere um räumliche Richtungen. Vorzugsweise sind die beiden Richtungen unterschiedlich, was eine eindeutige zweidimensionale Erfassung der Position der Messelektrode erleichtert. Bevorzugt verlaufen die beiden Richtungen senkrecht zueinander, sodass die Darstellung der Position der Messelektrode in einem orthogonalen Koordinatensystem vereinfacht ist, welches im Stand der Technik häufig als Bezugssystems verwendet wird. Vorzugsweise verläuft die Oberfläche des Messbereichs parallel zu den beiden Richtungen, sodass Einflüsse einer dritten räumlichen Richtung auf die Messung verringerbar oder sogar vermeidbar sind. Alternativ ist aber auch ein nicht-paralleler Verlauf der Oberfläche des Messbereichs bezüglich der beiden Richtungen möglich. Die Oberfläche des Messbereichs kann z.B. eben, gekrümmt oder wellenförmig ausgebildet sein.

Gemäß einer Ausgestaltung ist der Körper quaderförmig. Bevorzugt besteht der Körper aus leitfähigem Kunststoff, vorzugsweise aus einem mit Graphit oder Kohlenstoff versetzten Kunststoff. Die Elektroden bestehen vorteilhaft aus Metall und sind z.B. in Form einer metallischen Oberflächenbeschichtung auf den Körper aufgebracht. Bevorzugt sind die Elektroden an Seitenwänden des Körpers angeordnet, die vorzugsweise quer oder im Wesentlichen quer zur Oberfläche des Messbereichs verlaufen.

Der Messbereich kann mit dem Körper identisch sein. Bevorzugt ist der

Messbereich aber kleiner als der Körper, sodass z.B. verzerrende Einflüsse von Ecken und/oder Rändern des Körpers und/öder durch die Elektroden auf die Positions-bestimmung reduziert werden können. Vorzugsweise weist der Messbereich zu den Ecken und/oder Rändern des Körpers einen Abstand auf.

Bevorzugt ist wenigstens eine Betriebsspannungsquelle vorgesehen, mittels welcher an die Elektroden des ersten und/oder des zweiten Elektrodenpaars eine elektrische Betriebsspannung anlegbar ist. Die Betriebsspannungsquelle ist insbesondere eine Gleichspannungsquelle.

Gemäß einer möglichen Ausgestaltung bilden eine der Elektroden des ersten Elektrodenpaars und eine der Elektroden des zweiten Elektrodenpaars ein erstes logisches Elektrodenpaar und eine andere der Elektroden des ersten Elektrodenpaars und eine andere der Elektroden des zweiten Elektrodenpaars ein zweites logisches Elektrodenpaar. In diesem Fall ist mittels der Betriebsspannungsquelle bevorzugt an die Elektroden des ersten logischen und/oder des zweiten logischen Elektrodenpaars die Betriebsspannung anlegbar. Hinsichtlich der elektrischen Beschaltung können die Elektrodenpaare somit durch die logischen Elektrodenpaare ersetzt werden.

Gemäß einer Weiterbildung ist eine Steuereinrichtung vorgesehen, mittels welcher die Elektrodenpaare zeitlich nacheinander, vorzugsweise abwechselnd, mit der Betriebsspannungsquelle elektrisch verbindbar sind oder verbunden werden. Weiterhin ist wenigstens ein mit der Messelektrode elektrisch verbundener Spannungsmesser vorgesehen, der mit einer ersten Elektrode des ersten Elektrodenpaars und/oder mit einer ersten Elektrode des zweiten Elektrodenpaars elektrisch verbindbar oder verbunden ist und die elektrische Spannung zwischen der jeweiligen ersten Elektrode und der Messelektrode messen kann. Eine derartige Spannungsmessung gibt Auskunft über das elektrische Potential am Ort der Berührung von Messelektrode und Oberfläche des Messbereichs. Bevorzugt ist eine den Spannungsmesser umfassende oder mit diesem gekoppelte Auswerteeinrichtung vorgesehen, mittels welcher auf Basis der gemessenen Spannungen die Position der Messelektrode auf der Oberfläche des Messbereichs bestimmbar ist. Die Position der Messelektrode wird dabei vorzugsweise bezüglich der beiden Richtungen, also zweidimensional bestimmt. Die Steuereinrichtung und die Auswerteeinrichtung können voneinander getrennte Einrichtungen sein. Alternativ kann die Steuereinrichtung die Auswerteeinrichtung umfassen oder mit dieser in einer gemeinsamen Einrichtung zusammengefasst sein. Ferner kann die Steuereinrichtung den Spannungsmesser umfassen. Zur erweiterten Diagnose der Positionserfassungsvorrichtung ist es auch möglich, die Spannung zwischen der Messelektrode und beiden Elektroden eines der Elektrodenpaare zu messen.

Gemäß einer Weiterbildung sind ein mit dem Körper verbundenes und/oder diesen bildendes und/oder diesen umfassendes erstes Bauteil und ein mit der Messelektrode verbundenes und/oder diese bildendes und/oder diese umfassendes zweites Bauteil vorgesehen, welches relativ zu dem ersten Bauteil bewegbar, insbesondere an diesem bewegbar gelagert ist. Mittels der Auswerteeinrichtung ist vorzugsweise die relative Lage der beiden Bauteile zueinander bestimmbar. Bei den Bauteilen handelt es sich insbesondere um Fahrzeugbauteile. Der Körper ist mit dem ersten Bauteil vorzugsweise fest und/oder starr verbunden und/oder an dem ersten Bauteil gelagert. Der Körper kann auch bewegbar an dem ersten Bauteil gelagert sein. Die Messelektrode ist mit dem zweiten Bauteil vorzugsweise fest und/oder starr verbunden und/oder an dem zweiten Bauteil gelagert. Die Messelektrode kann auch bewegbar an dem zweiten Bauteil gelagert sein.

Gemäß einer Weiterbildung ist eine Schalthebelvorrichtung für ein Fahrzeug vorgesehen, welche die beiden Bauteile umfasst. Die Schalthebelvorrichtung weist insbesondere einen Träger, der eines der Bauteile bildet oder umfasst, und einen Schalthebel auf, der ein anderes der Bauteile bildet oder umfasst. Der Schalthebel ist relativ zu dem Träger in unterschiedliche Schalthebelstellungen bewegbar, wobei die aktuell eingelegte Schalthebelstellung mittels der Auswerteeinrichtung bestimmbar ist. Insbesondere ist der Schalthebel um eine Schwenkachse schwenkbar an dem Träger gelagert, sodass der Schalthebel relativ zu dem Träger in die unterschiedlichen Schalthebelstellungen um die Schwenkachse schwenkbar ist. Der Träger ist z.B. am Fahrzeugaufbau des Fahrzeugs befestigt oder gelagert. Vorzugsweise ist ein mit der Auswerteeinrichtung gekoppeltes Fahrzeuggetriebe vorgesehen, welches in Abhängigkeit von der aktuellen Schalthebelstellung betätigbar ist. Insbesondere bildet oder umfasst der Träger das erste Bauteil und der Schalthebel das zweite Bauteil. Alternativ bildet oder umfasst der Träger das zweite Bauteil und der Schalthebel das erste Bauteil.

Gemäß einer Ausgestaltung umfasst die Schalthebelvorrichtung eine mit einem Rastelement zusammenwirkendende Rastierung, mittels welcher der Schalthebel in unterschiedlichen Schalthebelstellungen verrastet werden kann. Bevorzugt bildet oder umfasst der Träger die Rastierung, in welche das am Schalthebel vorgesehene Rastelement in den unterschiedlichen Schalthebelstellungen einrasten kann. Ferner kann der Körper durch den Träger oder die Rastierung oder durch einen Teil des Trägers oder der Rastierung gebildet sein.

Die Erfindung betrifft ferner die Verwendung der oder einer Positionserfassungsvorrichtung zum Bestimmen der Position der Messelektrode auf der Oberfläche des Messbereichs, wobei
in einem ersten Schritt an die Elektroden des ersten Elektrodenpaars eine elektrische Betriebsspannung angelegt und eine erste elektrische Spannung zwischen der Messelektrode und einer ersten der Elektroden des ersten Elektrodenpaars gemessen wird,
in einem zweiten Schritt an die Elektroden des zweiten Elektrodenpaars eine elektrische Betriebsspannung angelegt und eine zweite elektrische Spannung zwischen der Messelektrode und einer ersten Elektrode des zweiten Elektrodenpaars gemessen wird, und
in einem dritten Schritt aus den gemessenen Spannungen die Position der Messelektrode auf der Oberfläche des Messbereichs bestimmt, insbesondere berechnet wird. Diese Verwendung kann gemäß allen im Zusammenhang mit der Positionserfassungsvorrichtung erläuterten Ausgestaltungen weitergebildet sein.

Der erste und der zweite Schritt werden bevorzugt zeitlich nacheinander durchgeführt. Insbesondere wird der zweite Schritt zeitlich nach dem ersten Schritt durchgeführt. Vorzugsweise wird der dritte Schritt gleichzeitig mit dem zweiten Schritt oder zeitlich nach dem zweiten Schritt durchgeführt. Die Berechnung der Position der Messelektrode erfolgt insbesondere mittels der Auswerteeinrichtung. Vorzugsweise wird mittels der Auswerteeinrichtung die aktuell eingelegte Schalthebelstellung des Schalthebels bestimmt.

Gemäß einer Ausgestaltung wird die mechanische Position der Messelektrode über ihre Lage in einem elektrischen Feld bestimmt. Das Material des Körpers ist dabei bevorzugt elektrisch leitend auszuführen, um eine Sensierung zu erleichtern oder zu ermöglichen. An das Bauteil, welches z.B. aus elektrisch leitfähigem Kunststoff besteht, werden insbesondere zwei Elektrodenpaare angebracht. Zur Positionserfassung der Messelektrode wird an die Elektroden eine elektrische Spannung angelegt, die in dem Körper ein elektrisches Feld erzeugt. Mittels der Messelektrode wird nun auf dem elektrischen Feld eine Spannung abgegriffen, die funktional abhängig vom Ort der Messelektrode ist. Zur Durchführung einer zweidimensionalen Positionserfassung wird das elektrische Feld insbesondere zeitlich versetzt in zwei unterschiedlichen Richtungen angelegt, die z.B. orthogonal zueinander verlaufen. Da keine zusätzlichen Sensorbauelemente zwingend erforderlich sind, wird durch die Erfindung eine kostengünstige Möglichkeit zur Positionserfassung geschaffen.

Die Erfindung wird nachfolgend anhand einer bevorzugten Ausführungsform unter Bezugnahme auf die Zeichnung beschrieben. In der Zeichnung zeigen:
Fig. 1 eine Seitenansicht einer Schalthebelvorrichtung für ein Kraftfahrzeug, die eine Positionserfassungsvorrichtung gemäß einer Ausführungsform umfasst,
Fig. 2 eine Vorderansicht der Schalthebelvorrichtung,
Fig. 3 eine Darstellung der Positionserfassungsvorrichtung in einem ersten Messzustand und
Fig. 4 eine Darstellung der Positionserfassungsvorrichtung in einem zweiten Messzustand.

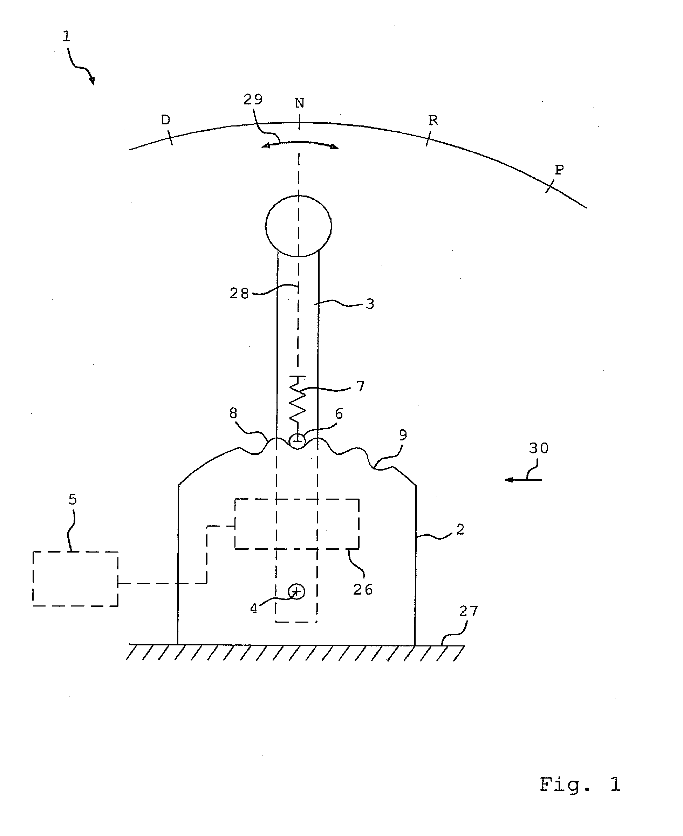

Aus Fig. 1 ist in schematischer Darstellung eine Schalthebelvorrichtung 1 ersichtlich, die einen an einem Fahrzeugaufbau 27 eines Fahrzeugs befestigten Träger 2 und einen Schalthebel 3 umfasst, der um eine Schwenkachse 4 schwenkbar an dem Träger 2 gelagert ist. Der Schalthebel 3 kann um die Schwenkachse 4 relativ zu dem Träger 2 in unterschiedliche Schalthebelstellungen P, R, N und D geschwenkt werden, die unterschiedlichen Betriebszuständen eines Kraftfahrzeuggetriebes 5 zugeordnet sind, welches in Fig. 1 gestrichelt dargestellt ist. Die Längsachse des Schalthebels 3 ist mit dem Bezugszeichen 28 gekennzeichnet. Ferner ist die Schwenkrichtung des Schalthebels 3 mit dem Bezugszeichen 29 gekennzeichnet.

Am Schalthebel 3 ist verschiebbar ein Rastelement 6 gelagert, welches mittels einer Feder 7 gegen eine am Träger 2 ausgebildete Rastierung 8 gedrückt wird. Die Rastierung 8 umfasst überwindbare Rastvertiefungen 9, in welche das Rastelement 6 einrücken kann. Jeder der Schalthebeistellungen P, R, N und D ist eine der Rastvertiefungen 9 eindeutig zugeordnet. Zur Erfassung der aktuell eingelegten Schalthebelstellung ist eine Positionserfassungsvorrichtung 26 vorgesehen, die mit dem Getriebe 5 verbunden und in Fig. 1 gestrichelt angedeutet ist. Gemäß Fig. 1 ist die aktuell eingelegte Schalthebelstellung N.

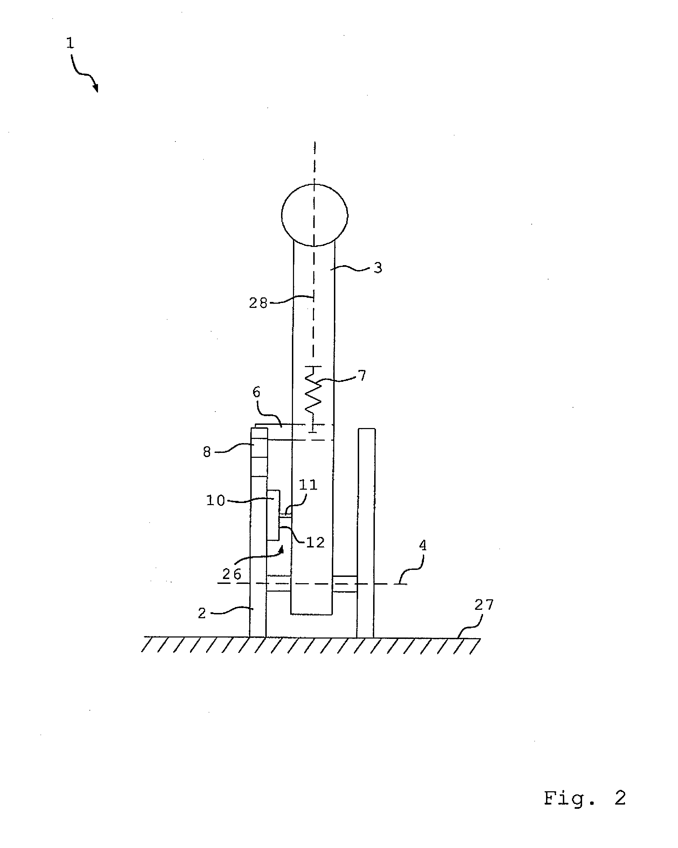

In Fig. 2 ist eine Ansicht der Schalthebelvorrichtung 1 in Richtung des aus Fig. 1 ersichtlichen und in Fahrzeuglängsrichtung verlaufenden Pfeils 30 gezeigt, wobei am Träger 2 ein elektrisch leitender Körper 10 befestigt ist, der einen elektrischen Widerstand bildet. Am Schalthebel 3 ist eine als elektrischer Schleifkontakt ausgebildete Messelektrode 11 befestigt, die mit einer dem Schalthebel 3 zugewandten Oberfläche 12 des Körpers 10 elektrisch leitend in Berührung steht. Wird der Schalthebel 3 relativ zu dem Träger 2 um die Schwenkachse 4 geschwenkt, so wird die Messelektrode 11 mit dem Schalthebel 3 mitgenommen und gleitet entlang der Oberfläche 12.

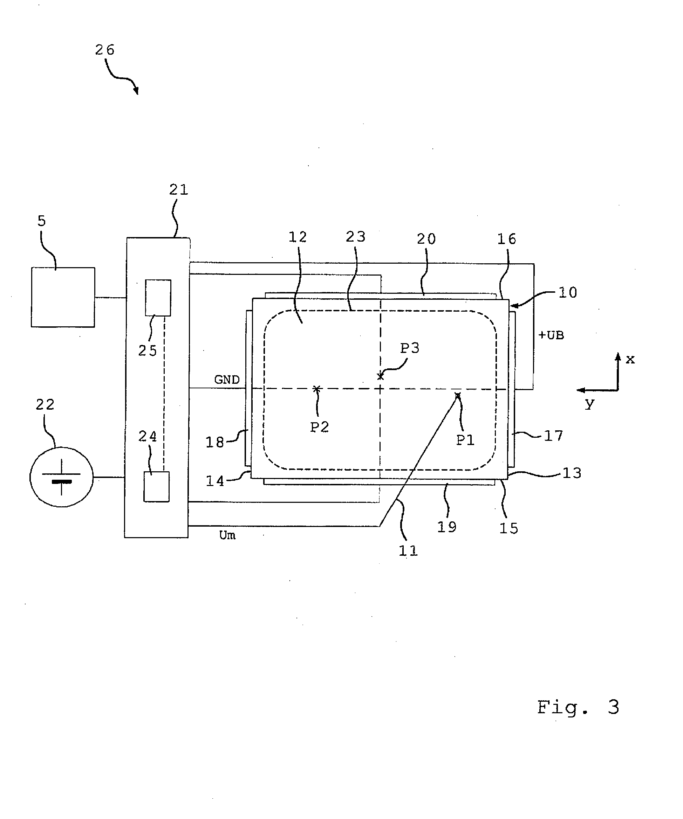

Aus Fig. 3 ist in schematischer Darstellung eine Draufsicht auf die Positionserfassungsvorrichtung 26 ersichtlich, wobei auf der Oberfläche 12 Positionen P1, P2 und P3 dargestellt sind, welche die Messelektrode 11 annehmen kann. Die Auswahl dieser Positionen ist lediglich beispielhaft und nicht einschränkend zu verstehen, sodass die Messelektrode 11 auch noch andere Positionen annehmen kann. Gemäß Fig. 3 ist die Messelektrode 11 in die Position P1 gestellt, was bedeutet, dass die Messelektrode 11 am Ort des Punkts P1 mit der Oberfläche 12 elektrisch leitend in Berührung steht.

Der Körper 10 ist quaderförmig ausgebildet und an seinen Seitenflächen 13, 14, 15 und 16 mit Elektroden 17, 18, 19 und 20 elektrisch verbunden, wobei die in y-Richtung einander gegenüberliegenden Elektroden 17 und 18 ein erstes Elektrodenpaar und die in x-Richtung einander gegenüberliegenden Elektroden 19 und 20 ein zweites Elektrodenpaar bilden. Die Elektroden 17 bis 20 und die Messelektrode 11 sind elektrisch mit einer Steuereinrichtung 21 verbunden, die elektrisch mit einer Betriebsspannungsquelle 22 gekoppelt ist.

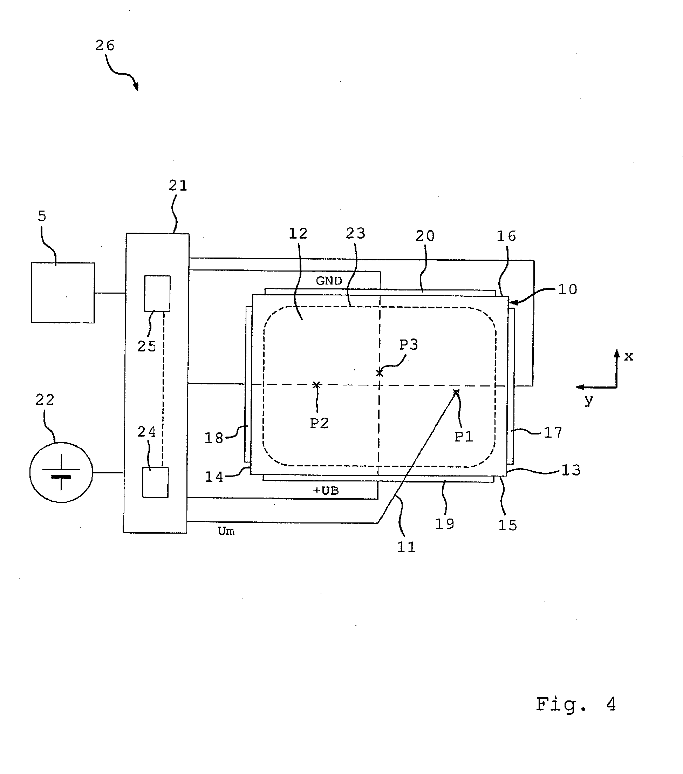

Mittels der Steuereinrichtung 21 wird in einem aus Fig. 3 ersichtlichen ersten Messzustand eine Betriebsspannung UB an die Elektroden 17 und 18 des ersten Elektrodenpaars angelegt und die elektrische Spannung Um zwischen der Messelektrode 11 und der Elektrode 18 gemessen. Anschließend wird mittels der Steuereinrichtung 21 in einem aus Fig. 4 ersichtlichen zweiten Messzustand die Betriebsspannung UB an die Elektroden 19 und 20 des zweiten Elektrodenpaars angelegt und die elektrische Spannung Um zwischen der Messelektrode 11 und der Elektrode 20 gemessen. Die Betriebsspannung UB wird von der Spannungsquelle 22 geliefert und ist hier eine Gleichspannung, wobei mit den Zeichen "+" und "GND" die Pole der Spannung UB gekennzeichnet sind. Das Messen der Spannungen Um erfolgt mittels eines Spannungsmessers 24 der Steuereinrichtung 21.

Da die gemessenen Spannungen Um im ersten Messzustand abhängig von der y-Richtung und im zweiten Messzustand abhängig von der x-Richtung sind, lässt sich durch die beiden Messungen der Ort P1 und somit die Position der Messelektrode 11 bezüglich der Oberfläche 12 in zwei Dimensionen bestimmen. Dazu umfasst die Steuereinrichtung 21 eine mit dem Spannungsmesser 24 gekoppelte Auswerteeinrichtung 25, mittels welcher aus den gemessenen Spannungen Um der Punkt P1 ermittelt werden kann. Ferner wird mittels der Auswerteeinrichtung 25 überprüft, ob der Punkt P1 einer der Schalthebelstellungen zugeordnet ist. Ist dies der Fall, wird mittels der Auswerteeinrichtung 25 die zugeordnete Schalthebelstellung bestimmt und ggf. das Getriebe 5 entsprechend ansteuert, welches mit der Steuereinrichtung 21 gekoppelt ist.

Steht die Messelektrode 11 am Ort des Punkts P2 oder P3 mit der Oberfläche 12 in Kontakt, wird in analoger Weise vorgegangen, wie zum Punkt P1 beschrieben.

In einem Versuch wurden bei einer Betriebsspannung von 5V z.B. die folgenden Spannungen Um an der Messelektrode 11 gemessen:

| Punkt | Potential in y-Richtung | Potential in x-Richtung |
|---|---|---|
| P1 | 2,53V | 2,53V |
| P2 | 2,08V | 2,52V |
| P3 | 2,39V | 1,89V |

Dabei entspricht das Potential in x-Richtung der Spannung Um im ersten Messzustand und das Potential in y-Richtung der Spannung Um im zweiten Messzustand.

Mit zwei aufeinanderfolgenden Spannungsmessungen lässt sich somit die Position der Messelektrode 11 auf der Oberfläche 12 eindeutig bestimmen. Da diese Position abhängig von der aktuellen Schalthebelstellung des Schalthebels 3 ist, lässt sich aus den Spannungsmessungen auch die aktuelle Schalthebelposition des Schalthebels 3 bestimmen.

Gemäß einer idealisierten Betrachtungsweise kann die gesamte, dem Schalthebel 3 zugewandte Oberfläche des Körpers 10 zum Erfassen der Position der Messelektrode 11 genutzt werden. In praktischer Hinsicht können an den Ecken und Rändern des Körpers 10 aber Verzerrungen des elektrischen Felds auftreten, sodass bevorzugt nur innerhalb eines Messbereichs 23 gemessen wird, der kleiner als der Körper 10 ist. Die Oberfläche 12 bezieht sich somit vorzugsweise auf den Messbereich 23. Dennoch soll nicht ausgeschlossen werden, dass sich der Messbereich 23 über den gesamten Körper 10 erstrecken kann, sodass die Oberfläche 12 der gesamten, dem Schalthebel 3 zugewandten Oberfläche des Körpers 10 entspricht. Gemäß der Ausführungsform ist die Oberfläche 12 rechteckig oder im Wesentlichen rechteckig.

### Bezugszeichenliste

- 1: Schalthebelvorrichtung
- 2: Träger
- 3: Schalthebel
- 4: Schwenkachse
- 5: Getriebe
- 6: Rastelement
- 7: Feder
- 8: Rastierung
- 9: Rastvertiefungen
- 10: Körper
- 11: Messelektrode
- 12: Oberfläche des Körpers
- 13: Seitenfläche des Körpers
- 14: Seitenfläche des Körpers
- 15: Seitenfläche des Körpers
- 16: Seitenfläche des Körpers
- 17: Elektrode
- 18: Elektrode
- 19: Elektrode
- 20: Elektrode
- 21: Steuereinrichtung
- 22: Betriebsspannungsquelle
- 23: Messbereich
- 24: Spannungsmesser
- 25: Auswerteeinrichtung
- 26: Positionserfassungsvorrichtung
- 27: Fahrzeugaufbau
- 28: Längsachse des Schalthebels
- 29: Schwenkrichtung des Schalthebels
- 30: Fahrzeuglängsrichtung
- x: Richtung
- y: Richtung
- UB: Betriebsspannung
- Um: Messspannung
- P1: Position der Messelektrode
- P2: Position der Messelektrode
- P3: Position der Messelektrode
- P: Schalthebelstellung
- R: Schalthebelstellung
- N: Schalthebelstellung
- D: Schalthebelstellung

## Patentansprüche

1. Positionserfassungsvorrichtung, mit einem ersten und einem zweiten Elektrodenpaar, einem einen elektrischen Widerstand bildenden, elektrisch leitenden Körper (10), der mit den Elektroden (17, 18, 19, 20) des ersten und zweiten Elektrodenpaars elektrisch verbunden ist und sich in einer ersten Richtung (y) zwischen den Elektroden (17, 18) des ersten Elektrodenpaares und in einer zweiten Richtung (x) zwischen den Elektroden (19, 20) des zweiten Elektrodenpaares erstreckt, einer Messelektrode (11), die mit der Oberfläche (12) eines zwischen den Elektroden (17, 18, 19, 20) des ersten und zweiten Elektrodenpaars liegenden Messbereichs (23) des Körpers (10) elektrisch leitend in Berührung steht und relativ zu diesem bewegbar ist, **gekennzeichnet durch** wenigstens einen mit der Messelektrode (11) elektrisch verbundenen Spannungsmesser (24), der mit einer ersten Elektrode (18) des ersten Elektrodenpaars und/oder mit einer ersten Elektrode (20) des zweiten Elektrodenpaars elektrisch verbindbar ist und die elektrische Spannung zwischen der jeweiligen ersten Elektrode (18; 20) und der Messelektrode (11) messen kann.

2. Positionserfassungsvorrichtung nach Anspruch 1, **dadurch gekennzeichnet, dass** die beiden Richtungen (x, y) senkrecht zueinander verlaufen.

3. Positionserfassungsvorrichtung nach Anspruch 1 oder 2, **dadurch gekennzeichnet, dass** die Oberfläche (12) des Messbereichs (23) parallel zu den Richtungen (x, y) verläuft.

4. Positionserfassungsvorrichtung nach einem der vorangehenden Ansprüche, **gekennzeichnet durch** wenigstens eine Betriebsspannungsquelle (22), mittels welcher an die Elektroden des ersten und/oder des zweiten Elektrodenpaars eine elektrische Betriebsspannung (UB) anlegbar ist.

5. Positionserfassungsvorrichtung nach Anspruch 4, **gekennzeichnet durch** eine Steuereinrichtung (21), mittels welcher die Elektrodenpaare zeitlich nacheinander mit der Betriebsspanungsquelle (22) elektrisch verbindbar sind.

6. Positionserfassungsvorrichtung nach einem der vorangehenden Ansprüche, **gekennzeichnet durch** eine den Spannungsmesser (24) umfassende oder mit diesem gekoppelte Auswerteeinrichtung (25), mittels welcher auf Basis der gemessenen Spannungen die Position der Messelektrode (11) auf der Oberfläche (12) des Messbereichs (23) bestimmbar ist.

7. Positionserfassungsvorrichtung nach einem der vorangehenden Ansprüche, **gekennzeichnet durch** ein mit dem Körper verbundenes oder diesen umfassendes erstes Bauteil, ein mit der Messelektrode verbundenes oder diese umfassendes zweites Bauteil, welches an dem ersten Bauteil bewegbar gelagert ist.

8. Positionserfassungsvorrichtung nach den Ansprüchen 6 und 7, **dadurch gekennzeichnet, dass** mittels der Auswerteeinrichtung (25) die relative Lage der beiden Bauteile zueinander bestimmbar ist.

9. Positionserfassungsvorrichtung nach Anspruch 8, **gekennzeichnet durch** eine Schalthebelvorrichtung (1) für ein Fahrzeug, welche einen eines der Bauteile bildenden Träger (2) und einen ein anderes der Bauteile bildenden Schalthebel (3) umfasst, der relativ zu dem Träger (2) in unterschiedliche Schalthebelstellungen (P, R, N, D) bewegbar ist, wobei mittels der Auswerteeinrichtung (25) die aktuell eingelegte Schalthebelstellung bestimmbar ist.

10. Positionserfassungsvorrichtung nach Anspruch 9, **gekennzeichnet durch** ein mit der Auswerteeinrichtung (24) gekoppeltes Fahrzeuggetriebe (5), welches in Abhängigkeit von der aktuellen Schalthebelstellung betätigbar ist.

11. Verwendung einer Positionserfassungsvorrichtung nach einem der vorangehenden Ansprüche zum Bestimmen der Position der Messelektrode (11) auf der Oberfläche (12) des Messbereichs (23), wobei in einem ersten Schritt an die Elektroden (17, 18) des ersten Elektrodenpaars eine elektrische Betriebsspannung (UB) angelegt und eine erste elektrische Spannung (Um) zwischen der Messelektrode (11) und einer ersten der Elektroden (18) des ersten Elektrodenpaars gemessen wird, in einem zweiten Schritt an die Elektroden (19, 20) des zweiten Elektrodenpaars eine elektrische Betriebsspannung (UB) angelegt und eine zweite elektrische Spannung (Um) zwischen der Messelektrode (11) und einer ersten der Elektroden (20) des zweiten Elektrodenpaars gemessen wird, in einem dritten Schritt aus den gemessenen Spannungen die Position (P1, P2, P3) der Messelektrode (11) auf der Oberfläche (12) des Messbereichs (23) berechnet wird.

12. Verwendung nach Anspruch 11, **dadurch gekennzeichnet, dass** der zweite Schritt zeitlich nach dem ersten Schritt durchgeführt wird.

13. Verwendung nach Anspruch 11 oder 12, **dadurch gekennzeichnet, dass** der dritte Schritt gleichzeitig mit dem zweiten Schritt oder zeitlich nach dem zweiten Schritt durchgeführt wird.

14. Verwendung nach einem der Ansprüche 11 bis 13 und nach Anspruch 10, **dadurch gekennzeichnet, dass** mittels der Auswerteeinrichtung (25) die aktuell eingelegte Schatthebelstellung (P, R, N, D) bestimmt wird.

## Claims

1. Position detection device comprising a first and a second electrode pair, an electrically conductive body (10), which forms an electrical resistance and which is electrically connected to the electrodes (17, 18, 19, 20) of the first and second electrode pair and extends in a first direction (y) between the electrodes (17, 18) of the first electrode pair and in a second direction (x) between the electrodes (19, 20) of the second electrode pair, a measuring electrode (11), which is in electrically conductive touching contact with the surface (12) of a measurement region (23) of the body (10), said measurement region being positioned between the electrodes (17, 18, 19, 20) of the first and second electrode pairs, and is movable relative to said body, **characterized by** at least one voltmeter (24), which is electrically connected to the measuring electrode (11) and which is electrically connectable to a first electrode (18) of the first electrode pair and/or to a first electrode (20) of the second electrode pair and can measure the electric voltage between the respective first electrode (18; 20) and the measuring electrode (11).

2. Position detection device according to Claim 1, **characterized in that** the two directions (x, y) are perpendicular to one another.

3. Position detection device according to Claim 1 or 2, **characterized in that** the surface (12) of the measurement region (23) is parallel to the directions (x, y).

4. Position detection device according to one of the preceding claims, **characterized by** at least one operating voltage source (22), by means of which an electric operating voltage (UB) can be applied to the electrodes of the first and/or second electrode pair.

5. Position detection device according to Claim 4, **characterized by** a control device (21), by means of which the electrode pairs are electrically connectable to the operating voltage source (22) in temporal succession.

6. Position detection device according to one of the preceding claims, **characterized by** an evaluation device (25), which comprises the voltmeter (24) or is coupled thereto and by means of which, on the basis of the measured voltages, the position of the measuring electrode (11) on the surface (12) of the measurement region (23) is determinable.

7. Position detection device according to one of the preceding claims, **characterized by** a first component part, which is connected to the body or comprises said body, a second component part, which is connected to the measuring electrode or comprises said measuring electrode and which is mounted movably on the first component part.

8. Position detection device according to Claims 6 and 7, **characterized in that** the relative position of the two component parts with respect to one another is determinable by means of the evaluation device (25).

9. Position detection device according to Claim 8, **characterized by** a switching lever apparatus (1) for a vehicle, which switching lever apparatus comprises a carrier (2) forming one of the component parts and a switching lever (3) forming another of the component parts, said switching lever being movable relative to the carrier (2) into different switching lever positions (P, R, N, D), wherein the presently selected switching lever position is determinable by means of the evaluation device (25).

10. Position detection device according to Claim 9, **characterized by** a vehicle transmission (5), which is coupled to the evaluation device (24) and is actuable depending on the present switching lever position.

11. Use of a position detection device according to one of the preceding claims for determining the position of the measuring electrode (11) on the surface (12) of the measurement region (23), wherein, in a first step, an electric operating voltage (UB) is applied to the electrodes (17, 18) of the first electrode pair and a first electric voltage (Um) is measured between the measuring electrode (11) and a first of the electrodes (18) of the first electrode pair, in a second step an electric operating voltage (UB) is applied to the electrodes (19, 20) of the second electrode pair and a second electric voltage (Um) is measured between the measuring electrode (11) and a first of the electrodes (20) of the second electrode pair, and in a third step the position (P1, P2, P3) of the measuring electrode (11) on the surface (12) of the measurement region (23) is calculated from the measured voltages.

12. Use according to Claim 11, **characterized in that** the second step is performed temporally after the first step.

13. Use according to Claim 11 or 12, **characterized in that** the third step is performed at the same time as the second step or temporally after the second step.

14. Use according to one of Claims 11 to 13 and according to Claim 10, **characterized in that** the presently selected switching lever position (P, R, N, D) is determined by means of the evaluation device (25).

## Revendications

1. Ensemble de saisie de position présentant
une première et une deuxième paire d'électrodes, un corps (10) électriquement conducteur formant une résistance électrique, raccordé électriquement aux électrodes (17, 18, 19, 20) de la première et de la deuxième paire d'électrodes et s'étendant dans une première direction (y) entre les électrodes (17, 18) de la première paire d'électrodes et dans une deuxième direction (x) entre les électrodes (19, 20) de la deuxième paire d'électrodes et
une électrode de mesure (11) en contact électriquement conducteur avec la surface (12) d'une partie de mesure (23) du corps (10) située entre les électrodes (17, 18, 19, 20) de la première et de la deuxième paire d'électrodes et apte à se déplacer par rapport cette dernière,
**caractérisé par**
au moins un dispositif (24) de mesure de tension raccordé électriquement à l'électrode de mesure (11), apte à être raccordé électriquement à une première électrode (18) de la première paire d'électrodes et/ou à une première électrode (20) de la deuxième paire d'électrodes et apte à mesurer la tension électrique entre la première électrode (18; 20) concernée et l'électrode de mesure (11).

2. Ensemble de saisie de position selon la revendication 1, **caractérisé en ce que** les deux directions (x, y) sont perpendiculaires l'une à l'autre.

3. Ensemble de saisie de position selon les revendications 1 ou 2, **caractérisé en ce que** la surface (12) de la partie de mesure (23) s'étend parallèlement aux directions (x, y).

4. Ensemble de saisie de position selon l'une des revendications précédentes, **caractérisé par** au moins une source (22) de tension de service par laquelle une tension électrique de service (UB) peut être appliquée sur les électrodes de la première et/ou de la deuxième paire d'électrodes.

5. Ensemble de saisie de position selon la revendication 4, **caractérisé par** un dispositif de commande (21) au moyen duquel les paires d'électrodes peuvent être raccordées électriquement l'une après l'autre à la source (22) de tension de service.

6. Ensemble de saisie de position selon l'une des revendications précédentes, **caractérisé par** un dispositif d'évaluation (25) comprenant le dispositif (24) de mesure de tension ou raccordé à ce dernier, et au moyen duquel la position de l'électrode de mesure (11) sur la surface (12) de la partie de mesure (23) peut être déterminée sur la base des tensions mesurées.

7. Ensemble de saisie de position selon l'une des revendications précédentes, **caractérisé par** un premier composant relié au corps ou comportant ce dernier et un deuxième composant relié à l'électrode de mesure ou comportant cette dernière et monté de manière déplaçable sur le premier composant.

8. Ensemble de saisie de position selon les revendications 6 et 7, **caractérisé en ce que** la position relative des deux composants l'un par rapport à l'autre peut être déterminée au moyen du dispositif d'évaluation (25).

9. Ensemble de saisie de position selon la revendication 8, **caractérisé par** un ensemble (1) à levier de changement de rapport de transmission pour véhicule, qui comporte un support (2) qui forme l'un des composants et un levier de changement de rapport de transmission (3) qui forme l'autre composant et apte à être déplacé par rapport au support (2) en différentes positions (P, R, N, D) du levier de changement de rapport de transmission, la position dans laquelle est engagé le levier de changement de rapport de transmission à tout instant pouvant être déterminée au moyen du dispositif d'évaluation (25).

10. Ensemble de saisie de position selon la revendication 9, **caractérisé par** une transmission (5) du véhicule raccordée au dispositif d'évaluation (24) et apte à être actionnée en fonction de la position effective du levier de changement de rapport de transmission.

11. Utilisation d'un ensemble de saisie de position selon l'une des revendications précédentes pour déterminer la position de l'électrode de mesure (11) sur la surface (12) de la partie de mesure (23), et dans lequel, dans une première étape, une tension électrique de service (UB) est appliquée sur les électrodes (17, 18) de la première paire d'électrodes et une première tension électrique (Um) est mesurée entre l'électrode de mesure (11) et une première (18) des électrodes de la première paire d'électrodes, dans une deuxième étape, une tension électrique de service (UB) est appliquée sur les électrodes (19, 20) de la deuxième paire d'électrodes et une deuxième tension électrique (Um) est mesurée entre l'électrode de mesure (11) et une première (20) des électrodes de la deuxième paire d'électrodes, tandis que dans une troisième étape, à partir des tensions mesurées, la position (P1, P2, P3) de l'électrode de mesure (11) sur la surface (12) de la partie de mesure (23) est calculée.

12. Utilisation selon la revendication 11, **caractérisée en ce que** la deuxième étape est exécutée après la première étape.

13. Utilisation selon les revendications 11 ou 12, **caractérisée en ce que** la troisième étape est exécutée en même temps que la deuxième étape ou après la deuxième étape.

14. Utilisation selon l'une des revendications 11 à 13 et selon la revendication 10, **caractérisée en ce que** la position (P, R, N, D) dans laquelle le levier de changement de rapport de transmission est engagé est déterminée à tout instant au moyen du dispositif d'évaluation (25).
